# FASCICULE DE BREVET EUROPEEN

(11) **EP 3 339 710 B1**
(45) Date de publication et mention de la délivrance du brevet: **26.06.2019**
(21) Numéro de dépôt: 17209935.0
(22) Date de dépôt: 22.12.2017
(51) Int. Cl.: F16L 37/138, F16L 37/22, F16L 37/23, F16L 37/084, F16L 37/14, F16L 37/34

(54) **ELÉMENT FEMELLE DE RACCORD, DESTINÉ À ÊTRE ACCOUPLÉ AVEC UN ÉLÉMENT MÂLE COMPLÉMENTAIRE ET RACCORD COMPRENANT UN TEL ÉLEMENT FEMELLE**
ANSCHLUSSBUCHSE ZUM ANSCHLIESSEN EINES ENTSPRECHENDES STECKERELEMENTS, UND ANSCHLUSS, DER EINE SOLCHE BUCHSE UMFASST
FEMALE CONNECTOR MEMBER, INTENDED FOR BEING COUPLED WITH A COMPLEMENTARY MALE MEMBER AND CONNECTOR COMPRISING SUCH A FEMALE MEMBER

(30) Priorité: 23.12.2016 FR 1663345
(43) Date de publication de la demande: 27.06.2018
(73) Titulaire: Staubli Faverges, 74210 Faverges (FR)
(72) Inventeur: TIBERGHIEN, Alain-Christophe, 74320 Sevrier (FR); DURIEUX, Christophe, 73200 Gilly sur Isere (FR); MOREL, Frédéric, 74210 Lathuile (FR)
(74) Mandataire: Lavoix

(56) Documents cités:
- EP-A1- 2 669 560
- GB-A- 2 283 069
- US-A- 2 092 116
- US-A1- 2005 023 826

## Description

Dans le domaine des raccords, il est connu qu'un raccord comprend un premier élément de raccord, appelé élément mâle ou about, et un second élément de raccord, appelé élément femelle. L'élément mâle comprend un corps qui est reçu à l'intérieur d'un corps de l'élément femelle.

L'invention concerne un élément femelle de raccord, destiné à être accouplé avec un élément mâle complémentaire.

L'invention concerne également un raccord comprenant l'élément femelle et l'élément mâle complémentaire. Le raccord selon l'invention est adapté pour la jonction amovible de deux canalisations de passage d'un fluide. Il s'agit en particulier d'un raccord dit « rapide », adapté pour la connexion amovible et sécurisée de conduites hautes pressions, notamment pour le domaine du sport automobile. Par exemple, le raccord peut être utilisé pour connecter une canalisation d'un véhicule à une source d'alimentation extérieure ou deux équipements embarqués sur le véhicule. Il est adapté à tout type de fluide, liquide ou gaz et à tout type de viscosité.

Il est connu de EP 2 048 425 A1 un raccord à griffes dans lequel l'élément mâle comprend une gorge périphérique et dans lequel l'élément femelle comporte plusieurs griffes, qui sont déformées élastiquement vers l'extérieur au contact du corps de l'élément mâle et qui reviennent dans leur position lorsqu'elles parviennent en regard de la gorge. Les griffes viennent alors se coincer dans la gorge, ce qui a pour effet de verrouiller axialement le corps mâle avec le corps femelle. Ce type de raccord ne permet pas d'obtenir une connexion fiable et sécurisée pour des canalisations haute pression et dans un environnement vibratoire, car les contraintes associées pourraient entrainer le décrochement des griffes et le déverrouillage intempestif du raccord.

EP 2 669 560 A1 divulgue une version de raccord améliorée, dans laquelle l'élément femelle comprend en outre une bague, pour maintenir les billes de verrouillage en position verrouillée et un élément mémoire, mobile entre une position distale, dans laquelle il est apte à maintenir les billes de verrouillage en position déverrouillée et une position proximale, dans laquelle il ne s'oppose pas au déplacement des billes radialement vers l'intérieur. L'élément mémoire est un tiroir mobile selon une direction parallèle à l'axe d'accouplement. Par conséquent, la course de l'élément mémoire est nécessairement importante puisqu'elle correspond sensiblement à la course nécessaire pour accoupler l'élément mâle avec l'élément femelle. Cela nécessite donc de prévoir un espace annulaire relativement long au sein de l'élément femelle. Cette construction est donc relativement encombrante à la fois dans le sens radial et dans le sens axial. Ce manque de compacité rend le raccord difficile à intégrer dans un environnement congestionné, ou du moins difficilement manoeuvrable dans un tel environnement.

C'est à ces inconvénients qu'entend plus particulièrement remédier l'invention en proposant un élément femelle de raccord plus compact.

A cet effet, l'invention concerne un élément femelle de raccord rapide, destiné à la jonction de canalisations sous pression, ledit élément femelle étant apte à être accouplé avec un élément mâle complémentaire et comprenant :
- un corps femelle creux définissant un axe central,
- des organes de verrouillage, chaque organe de verrouillage étant mobile radialement à l'intérieur d'une ouverture radiale correspondante du corps femelle entre une position de verrouillage, dans laquelle il dépasse radialement à l'intérieur du corps femelle, et une position déverrouillée, dans laquelle il est plus éloigné de l'axe central qu'en position de verrouillage,
- au moins un élément mémoire, mobile selon un axe de déplacement entre une position distale, dans laquelle il s'oppose au déplacement d'un organe de verrouillage de la position déverrouillée vers la position de verrouillage, et une position proximale, dans laquelle il ne s'oppose pas au déplacement de l'organe de verrouillage de la position déverrouillée vers la position de verrouillage, et
- une bague de blocage, qui est mobile axialement entre une position avancée, dans laquelle elle maintient les organes de verrouillage en position de verrouillage, et une position reculée, dans laquelle elle ne maintient pas les organes de verrouillage en position de verrouillage.

Conformément à l'invention, chaque élément mémoire est reçu dans un logement défini dans l'épaisseur du corps, chaque élément mémoire est, en position distale, plus proche de l'axe central que ne le sont les organes de verrouillage en position déverrouillée, et l'axe de déplacement de chaque élément mémoire entre la position distale et la position proximale est incliné par rapport à l'axe central du corps femelle.

Grâce à l'invention, la course de l'élément mémoire lors de l'accouplement est réduite puisque l'élément mémoire se déplace, non pas parallèlement à l'axe du raccord, mais de façon inclinée par rapport à celui-ci. L'élément femelle est donc plus compact dans le sens axial. En outre, l'élément mémoire est reçu dans un logement défini dans l'épaisseur du corps femelle, si bien qu'il n'occupe pas un étage à part entière, tel qu'un logement défini dans un espace annulaire qui débouche de façon visible en face avant de l'élément. L'élément femelle est donc également plus compact dans le sens radial. Ce gain en compacité présente l'avantage que le raccord peut être installé dans un espace confiné, tout en restant facilement manoeuvrable.

Selon des aspects avantageux mais non obligatoires de l'invention, l'élément femelle peut comporter une ou plusieurs des caractéristiques suivantes, prises dans toute combinaison techniquement admissibles :
- Lorsque la bague de blocage est dans une position intermédiaire, disposée axialement entre sa position avancée et sa position reculée, au moins un organe de verrouillage en position déverrouillée s'oppose à un retour élastique de la bague de blocage vers sa position avancée.
- L'axe de déplacement de chaque élément mémoire entre sa position distale et sa position proximale est incliné par rapport à l'axe central d'un angle compris entre 20° et 40°, de préférence égal à 30°.
- L'élément femelle comprend un moyen de rappel de chaque élément mémoire en position distale, ce moyen de rappel comprenant de préférence un ressort, qui est interposé radialement entre le corps femelle et la bague de blocage.
- Le moyen de rappel comprend un anneau, qui est mobile axialement entre le corps femelle et la bague de blocage et qui est chargé élastiquement contre l'élément mémoire.
- Chaque élément mémoire a une tête hémisphérique, configurée pour coopérer avec l'anneau.
- Les organes de verrouillage ont chacun une section non-circulaire dans un plan passant par l'axe central.
- L'élément femelle comprend plusieurs éléments mémoire répartis de façon régulière autour de l'axe central.
- Chaque élément mémoire est un pion avec une portion cylindrique dont les génératrices sont parallèles à son axe de déplacement.
- Chaque élément mémoire comprend un talon, de forme tronconique et configuré pour prendre appui contre un chanfrein de l'organe de verrouillage.

L'invention concerne également un raccord pour la jonction amovible de deux canalisations de passage d'un fluide, ce raccord comprenant un élément femelle tel que défini précédemment et un élément mâle complémentaire.

Selon des aspects avantageux mais non obligatoires de l'invention, un tel raccord peut comporter une ou plusieurs des caractéristiques suivantes, prises dans toute combinaison techniquement admissibles :
- L'élément mâle comporte un corps mâle, qui est apte à pousser chaque élément mémoire de sa position distale vers sa position proximale lorsqu'il est reçu à l'intérieur du corps femelle et à coopérer avec les organes de verrouillage lorsqu'ils sont en position de verrouillage pour empêcher le retrait axial du corps mâle à l'extérieur du corps femelle.
- Le corps mâle comporte une première surface apte à repousser chaque élément mémoire en position proximale et une deuxième surface apte à repousser chaque organe de verrouillage en position déverrouillée, alors que la première surface et la deuxième surface sont accolées l'une à l'autre.
- La première surface et la deuxième surface appartiennent à un relief du corps mâle, le relief étant de préférence une collerette comprenant une paroi proximale, une paroi distale formant la première surface et un sommet formant la deuxième surface et s'étendant entre la paroi proximale et la paroi distale.
- Lors du désaccouplement, chaque élément mémoire est rappelé en position distale pendant que les organes de verrouillage sont maintenus en position déverrouillée par la deuxième surface.

L'invention et d'autres avantages de celle-ci apparaitront plus clairement à la lumière de la description qui va suivre de trois modes de réalisation d'un élément femelle conforme à son principe, donnée uniquement à titre d'exemple et faite en référence aux dessins annexés dans lesquels :
- les figures 1 et 2 sont des coupes longitudinales représentant respectivement un élément mâle et un élément femelle, en configuration désaccouplée, d'un raccord selon un premier mode de réalisation de l'invention,
- la figure 3 est une coupe longitudinale représentant l'élément mâle et l'élément femelle en phase d'accouplement,
- la figure 4 est une coupe analogue à la figure 3, dans laquelle l'élément mâle et l'élément femelle sont en configuration accouplée,
- les figures 5 et 6 sont des vues à plus grande échelle de l'encerclé V de la figure 2 et l'encerclé VI de la figure 4 respectivement,
- les figures 7 et 8 sont des coupes transversales, respectivement selon la ligne VII-VII de la figure 2 et la ligne VIII-VIII de la figure 4,

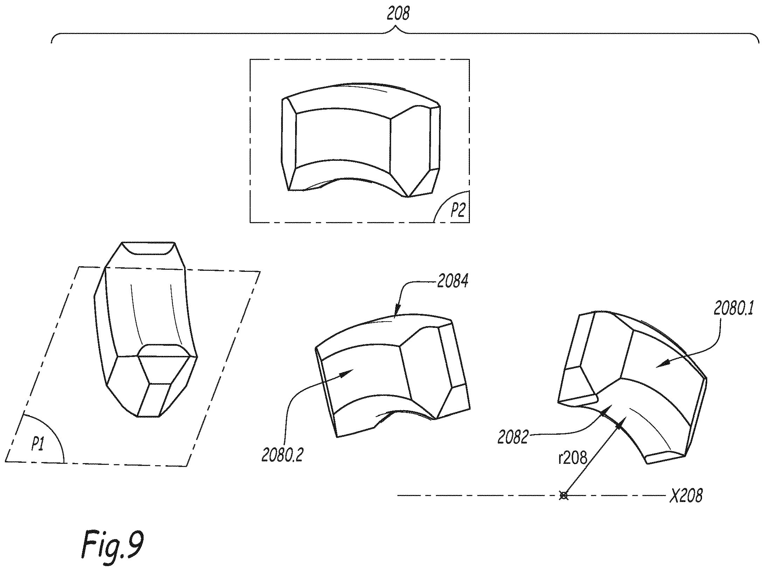

- la figure 9 représente plusieurs vues en perspective d'un organe de verrouillage appartenant à l'élément femelle des figures 2 à 4,
- la figure 10 est une coupe analogue aux figures 3 et 4, représentant les éléments mâle et femelle en phase de désaccouplement lorsque la bague de blocage est tractée,
- la figure 11 est une coupe analogue à la figure 2, représentant un élément femelle selon un second mode de réalisation de l'invention,
- les figures 12 et 13 sont des coupes longitudinales comparables aux figures 1 et 2, mais qui représentent un élément mâle et un élément femelle appartenant à un raccord selon un troisième mode de réalisation de l'invention,
- la figure 14 est une coupe analogue à la figure 3, représentant l'élément mâle et l'élément femelle en phase d'accouplement,
- la figure 15 est une coupe analogue à la figure 4, représentant l'élément mâle et l'élément femelle en configuration accouplée.

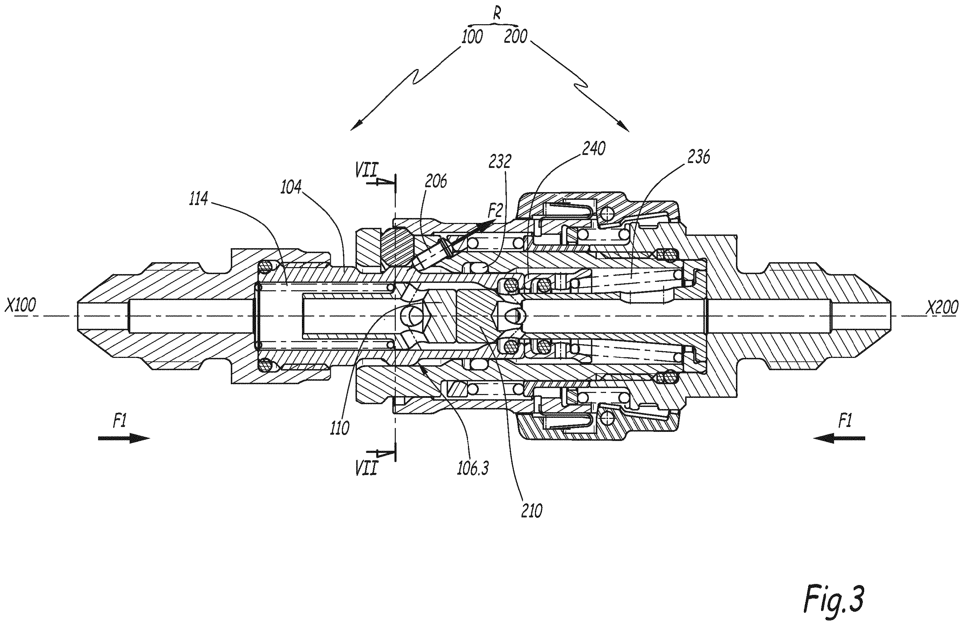

Sur les figures 3, 4 et 10 est représenté un raccord R pour la jonction amovible de canalisations de passage de fluide (non représentées), avec une pression pouvant aller jusqu'à 300 bars. Le raccord R comprend un premier élément de raccord 100 qui, dans le domaine considéré, est qualifié d'élément mâle ou d'about, et un second élément de raccord 200, qui est un élément femelle. Les éléments mâle et femelle, respectivement 100 et 200, sont destinés à être accouplés l'un avec l'autre pour assurer une communication fluidique entre les deux canalisations à raccorder.

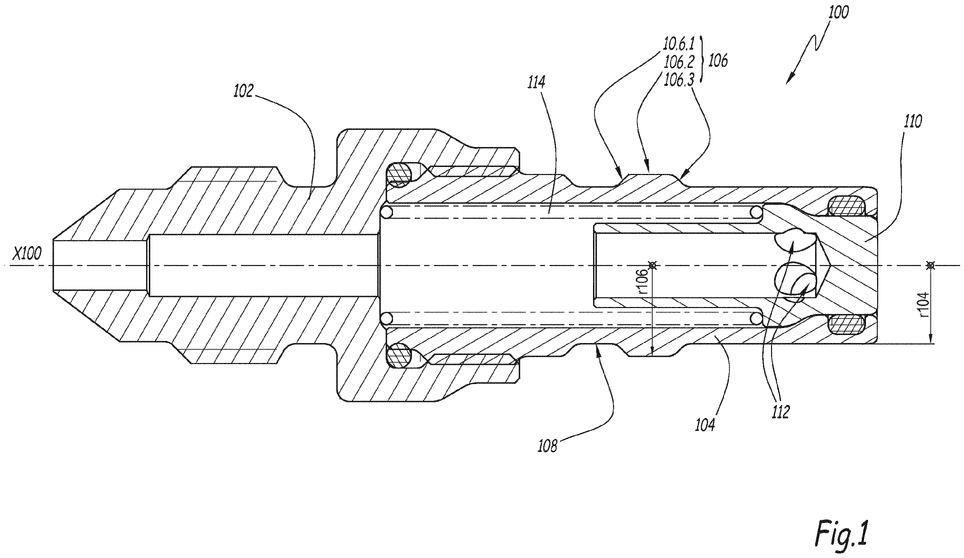

L'élément mâle 100 est représenté seul à la figure 1. Comme visible sur cette figure, l'élément mâle 100 s'étend selon un axe central X100. Il comprend un corps mâle 104, qui est vissé à l'intérieur d'un corps d'adaptateur mâle 102. Le corps d'adaptateur mâle 102 est configuré pour être raccordé avec une extrémité d'une canalisation souple ou rigide (non représentée). Au sens de l'invention, une sortie d'un équipement, tel qu'une pompe ou un réservoir, peut également être considérée comme une canalisation.

Dans la suite de la description, une direction « axiale » désigne une direction parallèle à un axe d'accouplement du raccord R, une direction « radiale » définit une direction perpendiculaire et sécante à l'axe d'accouplement du raccord R. En outre, l'adjectif « distal » ou « avant » utilisé en lien avec un élément de raccord parmi les éléments 100 et 200 désigne une direction axiale orientée vers l'élément de raccord complémentaire lors de la phase d'accouplement, l'adjectif « proximal » ou « arrière » étant utilisé pour désigner une direction axiale orientée du côté opposé à l'élément de raccord complémentaire lors de la phase d'accouplement, c'est-à-dire orientée du côté de la canalisation à laquelle est raccordée l'élément de raccord.

Le corps mâle 104 est creux, c'est à dire de forme tubulaire centrée sur l'axe X100. Il comprend un logement externe 108, délimité sur la surface périphérique extérieure du corps 104. Dans l'exemple, le logement 108 est une gorge périphérique.

Le corps mâle 104 comprend également, sur sa surface périphérique extérieure, un relief 106, qui est agencé de façon distale par rapport au logement 108. Le relief 106 est une partie saillante vers l'extérieur par rapport à la surface radiale externe du corps 104. Avantageusement, le relief 106 est une collerette annulaire comprenant une paroi proximale 106.1, une paroi distale 106.3 et un sommet 106.2 s'étendant entre les parois 106.1 et 106.3. Dans l'exemple, les parois 106.1 et 106.3 sont des surfaces tronconiques centrées sur l'axe X100, alors que le sommet 106.2 est une surface cylindrique centrée également sur l'axe X100. Les parois 106.2 et 106.3 sont accolées, c'est-à-dire qu'elles délimitent une arête en commun, ou que leurs profils se confondent dans un arrondi ou un congé commun.

Un clapet 110 est mobile axialement à l'intérieur du corps mâle 104. Plus précisément, le clapet 110 est mobile en translation entre une position de fermeture, ou désaccouplée, dans laquelle il empêche le fluide circulant dans la canalisation reliée au corps d'adaptateur mâle 102 de traverser l'élément de raccord 100 et une position d'ouverture, ou accouplée, dans laquelle il ne s'oppose pas au passage du fluide à travers le raccord R.

Le clapet 110 est chargé élastiquement en position de fermeture par un moyen de rappel 114 qui, dans l'exemple, est un ressort hélicoïdal centré sur l'axe X100. Le ressort 114 est interposé entre un épaulement du clapet 110 et un épaulement du corps d'adaptateur mâle 102.

Le clapet 110 délimite au moins une, de préférence plusieurs ouvertures 112, qui permettent au fluide de s'écouler autour du clapet 110 lorsque celui-ci est poussé vers l'arrière à l'encontre de l'effort élastique du ressort 114. Les ouvertures 112 sont définies dans l'épaisseur du clapet 110, c'est-à-dire qu'elles s'étendent de façon non parallèle par rapport à l'axe X100.

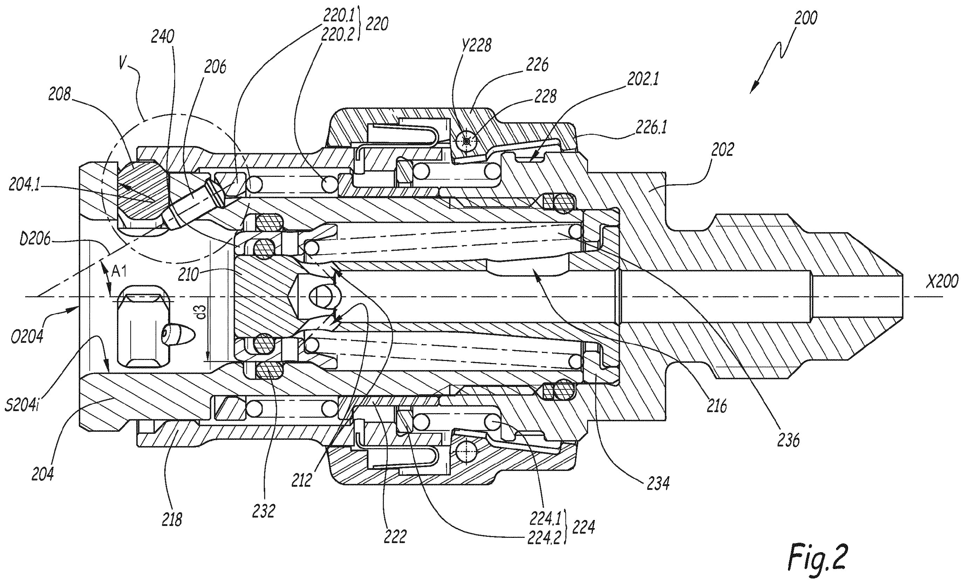

L'élément femelle 200 est représenté seul à la figure 2. Comme visible sur cette figure, l'élément femelle 200 s'étend selon un axe central X200. L'élément femelle 200 comprend un corps femelle 204 qui est vissé à l'intérieur d'un corps d'adaptateur femelle 202. Le corps d'adaptateur femelle 202 est prévu pour être raccordé à une extrémité d'une canalisation soupe ou rigide (non représentée).

Le corps femelle 204 est creux, c'est-à-dire de forme tubulaire centrée sur l'axe X200. Il comprend une surface radiale interne S204i définissant une cavité centrale O204 formant une embouchure de réception du corps mâle 104. Le corps femelle 204 délimite plusieurs ouvertures radiales 204.1 qui reçoivent chacune un organe de verrouillage 208 correspondant. Les ouvertures radiales 204.1 sont définies dans l'épaisseur du corps femelle 204. Dans l'exemple, le corps femelle 204 comprend trois ouvertures radiales 204.1.

Le corps femelle 204 délimite également au moins un logement 204.2, à l'intérieur duquel est reçu un élément mémoire 206. Chaque logement 204.2 est agencé de façon proximale par rapport aux ouvertures 204.1. Chaque logement 204.2 est défini dans l'épaisseur du corps femelle 204. Cela signifie que chaque logement 204.2 s'étend entre la partie intérieure du corps femelle 204, c'est-à-dire la cavité centrale, et l'extérieur du corps femelle. Autrement formulé, chaque logement 204.2 traverse le corps femelle 204 selon une direction non-parallèle à l'axe X200.

Dans l'exemple, chaque logement 204.2 est un trou traversant, c'est-à-dire un trou qui débouche à l'intérieur du corps femelle 204 d'un côté, c'est à dire dans l'embouchure de réception O204, et à l'extérieur du corps femelle 204 de l'autre côté.

Dans l'exemple des figures, l'élément femelle 200 comprend trois organes de verrouillage 208 et trois éléments mémoires correspondants 206. Le corps femelle 204 a donc trois logements 204.2.

Les ouvertures radiales 204.1 sont avantageusement réparties de façon régulière autour de l'axe X200. De la même manière, les logements 204.2 sont également répartis de manière régulière autour de l'axe X200.

Chaque organe de verrouillage 208 est mobile radialement à l'intérieur d'une ouverture correspondante 204.1 entre une position de verrouillage, dans laquelle il dépasse radialement à l'intérieur du corps femelle 204, c'est-à-dire à l'intérieur de l'embouchure O204 que forme le corps femelle 204 à l'avant et une position déverrouillée, dans laquelle il est plus éloigné de l'axe central X200 qu'en position de verrouillage. Cela signifie que, lors du déplacement des organes de verrouillage 208 de leur position de verrouillage vers leur position déverrouillée, chaque organe de verrouillage 208 s'escamote radialement pour pénétrer dans son ouverture 204.1, et ceci davantage qu'en position de verrouillage.

De préférence, chaque organe de verrouillage 208 ne dépasse pas radialement à l'intérieur du corps femelle 204 lorsqu'il est en position déverrouillée. Toutefois, en variante, chaque organe de verrouillage 208 pourrait dépasser radialement à l'intérieur du corps femelle 204 même en position déverrouillée et sans pour autant limiter la possibilité d'insertion ou de retrait de l'élément mâle dans l'embouchure O204 du corps femelle.

En position de verrouillage, chaque organe de verrouillage 208 est disposé et maintenu en saillie par rapport à la surface radiale interne S204i du corps femelle 204.

Tous les organes de verrouillage 208 sont identiques, c'est pourquoi l'un seulement des organes de verrouillage 208 est décrit ci-après.

L'organe de verrouillage 208 est un segment de bague, qui s'étend selon une direction périphérique par rapport à l'axe X200. L'organe de verrouillage 208 a donc un axe de courbure X208 et un rayon de courbure r208. Il a deux plans de symétrie orthogonaux, respectivement P1 et P2. Le plan de symétrie P2 est perpendiculaire à l'axe de courbure X208, alors que le plan de symétrie P1 passe par l'axe de courbure X208.

L'organe de verrouillage 208 a une section non-circulaire dans un plan passant par l'axe central X200, c'est-à-dire par exemple dans le plan des figures 2, 5 et 6. Effectivement, la section de chaque organe de verrouillage 208 dans ce plan est polygonale, c'est-à-dire qu'elle comprend plusieurs angles. En particulier, l'organe de verrouillage 208 comprend deux surfaces opposées 2080.1 et 2080.2 qui sont perpendiculaires à l'axe X200 lorsque les organes de verrouillage 208 sont positionnés à l'intérieur des ouvertures 204.1. La surface 2080.1 est disposée côté proximal et la surface 2080.2 est disposée côté distal. L'organe de verrouillage 208 comprend également une surface radiale interne 2082 et une surface radiale externe 2084.

Avantageusement, l'organe de verrouillage 208 comprend un chanfrein 2086.1 qui relie la surface radiale externe 2084 avec la surface axiale proximale 2080.1.

Egalement, l'organe de verrouillage 208 comprend de manière optionnelle un chanfrein 2088.1 qui relie la surface radiale interne 2082 avec la surface axiale proximale 2080.1. De préférence, l'organe de verrouillage 208 comprend également un chanfrein 2088.2 qui relie la surface radiale interne 2082 avec la surface axiale distale 2080.2.

Dans l'exemple, les chanfreins 2086.1, 2088.1 et 2088.2 s'étendent chacun à 45° par rapport aux surfaces dont ils assurent la jonction.

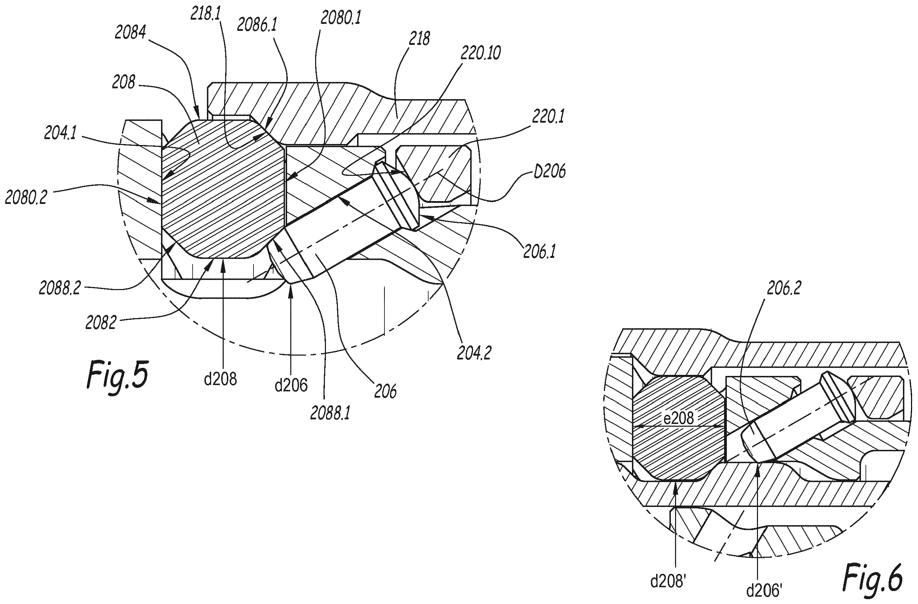

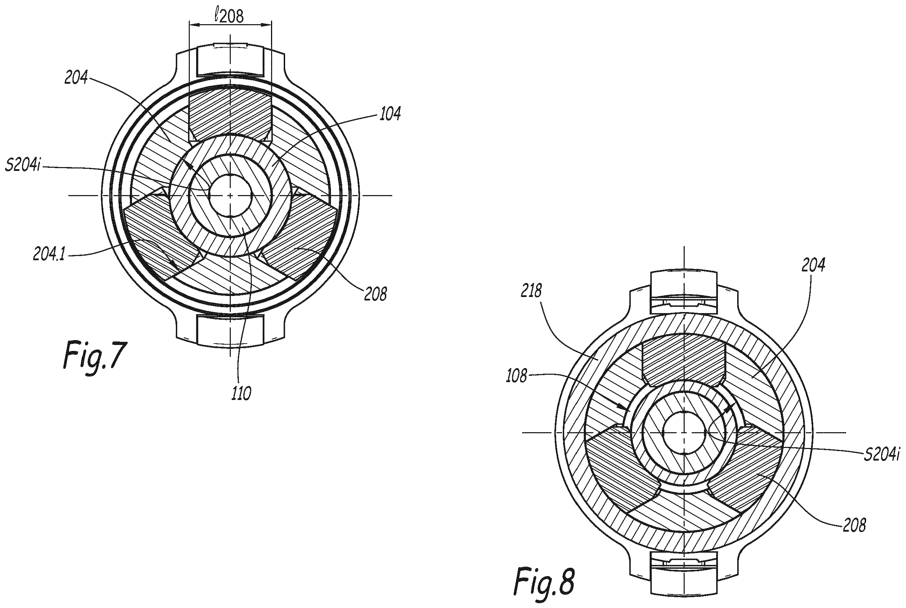

Comme visible à la figure 7, chaque organe de verrouillage présente une longueur I208 qui est, dans l'exemple, de 5 mm. La longueur I208 est mesurée selon un axe perpendiculaire au plan de symétrie P1. Comme visible à la figure 6, chaque organe de verrouillage a une épaisseur e208 maximale de 2,1 mm et une épaisseur minimale de 1,6 mm. Notamment, cette épaisseur minimale se retrouve du côté de la surface radiale interne 2082. L'épaisseur de l'organe de verrouillage 208 est mesurée perpendiculaire au plan de symétrie P2.

Chaque élément mémoire 206 est mobile selon un axe de déplacement D206 entre une position distale, dans laquelle il s'oppose au déplacement de l'organe de verrouillage 208 de la position déverrouillée vers la position de verrouillage et une position proximale, dans laquelle il ne s'oppose pas au déplacement de l'organe de verrouillage 208 de la position déverrouillée vers la position de verrouillage. Plus précisément, en position distale, chaque élément mémoire 206 est apte à maintenir uniquement l'un des organes de verrouillage 208 en position déverrouillée de sorte que chaque élément mémoire s'oppose au déplacement des organes de verrouillage 208 vers leur position de verrouillage, et en position proximale, les éléments mémoire 206 ne sont plus en contact avec les organes de verrouillage 208. Chaque élément mémoire 206 se déplace vers l'arrière lorsqu'il passe de la position distale à la position proximale.

Dans l'exemple, chaque élément mémoire 206 est un pion avec une portion cylindrique dont les génératrices sont parallèles à son axe de déplacement D206.

Comme visible aux figures 5 et 6, le pion 106 comprend une portion centrale cylindrique et deux extrémités longitudinales formées respectivement par une tête hémisphérique 206.1 et un talon tronconique 206.2. Dans l'exemple, le talon tronconique 206.2 présente un angle d'inclinaison d'environ 15°. Le talon 206.2 est configuré pour prendre appui, en configuration désaccouplée, contre le chanfrein proximal 2088.1 d'un organe de verrouillage 208 correspondant, de façon à maintenir l'organe de verrouillage 208 en position déverrouillée. De préférence, le diamètre de la partie centrale de chaque pion 106 est de l'ordre de de 1,2 mm.

Avantageusement, le talon tronconique 206.2 de chaque élément mémoire 206 définit un contact linéique avec le chanfrein 2088.1 de l'organe de verrouillage 208 lorsqu'il prend appui avec ce dernier.

Chaque élément mémoire 206 dépasse à l'intérieur du corps femelle 204 lorsqu'il est en position distale. De préférence, chaque élément mémoire 206 ne dépasse pas à l'intérieur du corps femelle 204 lorsqu'il est en position proximale. Toutefois, en variante non représentée, on pourrait imaginer une configuration dans laquelle chaque élément mémoire 206 dépasserait radialement à l'intérieur du corps femelle 204 même en position proximale. En position distale, chaque élément mémoire 206 est accessible au corps 104 de l'élément mâle 100, c'est-à-dire est apte à coopérer avec le corps 104 de l'élément mâle 100. Plus précisément, chaque élément mémoire 206 entre en contact avec et est repoussé par l'élément mâle 100.

L'axe de déplacement D206 de chaque élément mémoire 206 est incliné par rapport à l'axe central X200 du corps femelle 204. De préférence, l'axe de déplacement D206 et l'axe central X200 sont sécants.

Avantageusement, l'axe de déplacement D206 de chaque élément mémoire 206 est incliné par rapport à l'axe central X200 d'un angle A1 compris entre 20° et 40°, de préférence égal à 30°. La course de chaque élément mémoire 206 dépend de l'inclinaison de l'axe de déplacement D206 par rapport à l'axe central X200. Elle est comprise entre 0,5 mm et 5 mm, dans l'exemple égale à 1,2 mm.

De manière optionnelle, l'élément femelle 200 comprend un moyen 220 de rappel des éléments mémoire 206 en position distale. Dans l'exemple, ce moyen de rappel 220 comprend un anneau 220.1 et un unique ressort 220.2. Le fait d'avoir un unique ressort pour rappeler les éléments mémoire 206 en position distale réduit avantageusement le risque de coincement d'un ou plusieurs des éléments mémoire 206 et assure une bonne répartition des efforts. L'anneau 220.1 sert astucieusement à rappeler tous les éléments mémoire 206 ensemble et simultanément. Le ressort 220.2 est interposé entre l'anneau 220.1 et une bague d'appui 222, laquelle est en butée axialement contre le corps d'adaptateur femelle 202.

L'anneau 220.1 est mobile axialement autour du corps femelle 204. Dans l'exemple, l'anneau 220.1 est monté autour du corps femelle 204 avec un jeu radial de l'ordre de 0,1 mm. L'anneau 220.1 est centré sur l'axe X200 et est chargé élastiquement contre chaque élément mémoire 206. En particulier, l'anneau 220.1 coopère avec la tête hémisphérique 206.2 de l'élément mémoire 206 lors du rappel de l'élément mémoire en position distale par appui et par glissement de leurs surfaces de contact respectives. Notamment, l'anneau 220.1 délimite une surface 220.10 de contact avec la tête hémisphérique 206.1 qui est sensiblement perpendiculaire à l'axe D206 de déplacement du pion 206. L'angle d'inclinaison de la surface 220.10 par rapport à l'axe X200 est donc identique à l'angle d'inclinaison de l'axe D206 par rapport à l'axe X200. Cet angle est donc de 30° dans l'exemple des figures.

L'élément femelle 200 comprend également une bague de blocage 218, qui est mobile axialement autour du corps femelle 204. Le moyen de rappel 220 est avantageusement interposé radialement entre le corps femelle 204 et la bague de blocage 218.

La bague de blocage 218 est mobile entre une position avancée, dans laquelle elle maintient les organes de verrouillage 208 en position de verrouillage, et une position reculée dans laquelle elle ne maintient pas les organes de verrouillage en position de verrouillage. En configuration désaccouplée du raccord R, la bague de blocage 218 reste dans une position intermédiaire, qui est située axialement dans la course de la bague 218 entre les positions reculée et avancée, et dans laquelle elle est chargée élastiquement contre les organes de verrouillage 208, lorsque ces derniers sont en position déverrouillée, les organes de verrouillage 208 s'opposant alors au retour de la bague de blocage 218 dans sa position avancée. Dans l'exemple, la bague de blocage 218 est chargée élastiquement contre les organes de verrouillage 208 par un moyen de rappel 224. Ce moyen de rappel 224 comprend avantageusement un anneau 224.1 et un ressort 224.2. L'anneau 224.1 est chargé élastiquement par le ressort 224.2 vers l'avant. Il coopère avec un épaulement radial interne de la bague de blocage 218. Le ressort 224.2 est interposé axialement entre le corps d'about femelle 202 et l'anneau 224.1. Ce chargement élastique permet un retour automatique de la bague de blocage 218 de sa position intermédiaire vers sa position avancée à l'accouplement, et est avantageux pour disposer d'un raccord automatique qui se connecte facilement par simple rapprochement de ses deux éléments de raccord selon l'axe d'accouplement.

Le moyen de rappel est agencé radialement entre la bague d'appui 222 et la bague de blocage 218. De cette manière, le fonctionnement du moyen de rappel 224 n'interfère avec celui du moyen de rappel 220.

De préférence, la bague de blocage 218 comprend un chanfrein intérieur périphérique 218.1 destiné à coopérer, à l'accouplement, par appui avec le chanfrein proximal 2086.1 des organes de verrouillage 208 lorsqu'au moins un des organes de verrouillage 208 est maintenu en position déverrouillée et dépasse radialement à l'extérieur du corps femelle 204.

De manière optionnelle, l'élément femelle 200 comporte également deux leviers diamétralement opposés 226. Les deux leviers 226 sont montés chacun articulés autour d'un axe de rotation Y228 défini par un pion 228. Le pion 228 fait partie de la bague de blocage 218. L'axe Y228 est orthoradial, c'est-à-dire perpendiculaire à un axe radial à l'axe X200. Les deux leviers 226 comportent chacun un talon 226.1 destiné à être engagé, à l'état accouplé, à l'intérieur d'une gorge périphérique 236 ménagée sur l'extérieur du corps d'adaptateur femelle 202. Les deux leviers 226 sont montés à l'arrière de la bague de blocage 218 et sont liés en translation à la bague 218. Ces deux leviers 226 sont configurés pour s'opposer au recul de la bague 218 lorsque le raccord R est en configuration accouplée.

Une lame ressort 230, en forme de U, est interposée radialement entre chaque levier 226 et la bague de blocage 218. Grâce à ces lames ressorts 230, les leviers 226 basculent automatiquement vers leur position de verrouillage lorsque le raccord parvient en position accouplée. Chaque lame ressort 230 comprend une extrémité engagée radialement dans un trou radial pratiqué dans la bague 218.

Avantageusement, l'élément femelle 200 comprend un passage de fluide et un tiroir 240, qui est mobile axialement à l'intérieur du corps femelle 204 entre une position d'ouverture et une position de fermeture du passage. La position de fermeture est une position avancée, ou distale, alors que la position d'ouverture est une position reculée, ou proximale. Le tiroir 240 est chargé élastiquement vers l'avant par un ressort 236 interposé entre un épaulement radial interne du tiroir 240 et une pièce d'appui 234 positionnée contre un épaulement radial interne du corps d'adaptateur femelle 202 de l'élément femelle 200.

De préférence, l'élément femelle 200 comprend aussi un piston fixe 210, qui est disposé à l'intérieur du tiroir 240 et qui est apte à pousser, lors de l'accouplement, le clapet 110 de l'élément mâle 100. Le piston fixe 210 comprend une cavité centrale et délimite au moins une, de préférence plusieurs ouvertures 212, qui sont formées dans l'épaisseur du piston 210 et qui permettent au fluide circulant autour du piston 210 de rejoindre la cavité centrale de celui-ci. Le fluide peut alors ensuite rejoindre la canalisation raccordée au corps d'adaptateur femelle 202.

Dans l'exemple, les faces d'extrémités avant du piston 210 et du tiroir 240 sont affleurantes, c'est-à-dire coplanaires, lorsque l'élément femelle 200 est en configuration désaccouplée, ce qui permet de limiter les fuites à l'accouplement. Ceci est possible car le tiroir 240 ne sert pas à maintenir les organes de verrouillage 208 en position déverrouillée, comme dans EP 2 669 560 A1.

Avantageusement, le piston 210 comprend également une ouverture radiale 216, à l'arrière des ouvertures 212. Cette ouverture radiale 216 présente l'avantage de faciliter le déplacement du tiroir 240 à l'accouplement, et donc de limiter les efforts axiaux nécessaires à l'accouplement du raccord.

En position de fermeture, le tiroir 240 coopère avec un joint d'étanchéité 232 reçu dans une gorge périphérique intérieure du corps femelle 204. Le joint d'étanchéité 232 est plus proche de l'axe central X200 que ne l'est l'élément mémoire 206 lorsqu'il est en position distale. Autrement dit, la distance minimale d3 entre le joint d'étanchéité 232 et l'axe X200, qui correspond à la moitié de ce qu'on appelle le « diamètre d'étanchéité », est inférieure à la distance minimale d206, visible à la figure 5, entre chaque élément mémoire 206, en position distale, et l'axe central X200. Egalement, la distance d3 est inférieure à la distance minimale d208 entre l'un quelconque des organes de verrouillage 208 et l'axe X200.

La cavité centrale O204 du corps femelle 204, qui reçoit le corps mâle 104, est donc plus large à l'avant. L'embouchure de réception du corps mâle 104 se rétrécit au niveau de la gorge de réception du joint 232. Cela permet de limiter le risque que la portion avant du corps mâle 104, c'est-à-dire la portion disposée à l'avant de la collerette 106, entre en contact avec les organes de verrouillage 208 et avec les éléments mémoire 206. En particulier, cela permet que si le corps 104 est introduit coaxialement à l'intérieur du corps femelle 204, alors la portion cylindrique disposée à l'avant de la collerette 106 ne touche pas les pièces 208 et 206.

Comme visible à la figure 5, en position distale, chaque élément mémoire 206 est plus proche de l'axe central X200 que ne le sont les organes de verrouillage 208 lorsqu'ils sont en position déverrouillée. Autrement dit, la distance minimale d206 entre chaque élément mémoire 206, en position distale, et l'axe X200 est inférieure à la distance minimale d208 entre chacun des organes de verrouillage 208, en position déverrouillée, et l'axe X200.

En configuration désaccouplée, le tiroir 240 est en position de fermeture et obture le passage de fluide. La bague de blocage 218 est chargée élastiquement vers l'avant sous l'effort élastique du ressort 224.2, dans la position intermédiaire où elle est en butée contre les organes de verrouillage 208. L'anneau 220.1 est chargé élastiquement vers l'avant et maintient chacun des éléments mémoire 206 en position distale. Le talon 206.2 de chaque élément mémoire 206 qui agit sur un organe de verrouillage correspondant 208 pour maintenir ce dernier en position déverrouillée, ce qui, par conséquent, maintient la bague de blocage 218 en position intermédiaire.

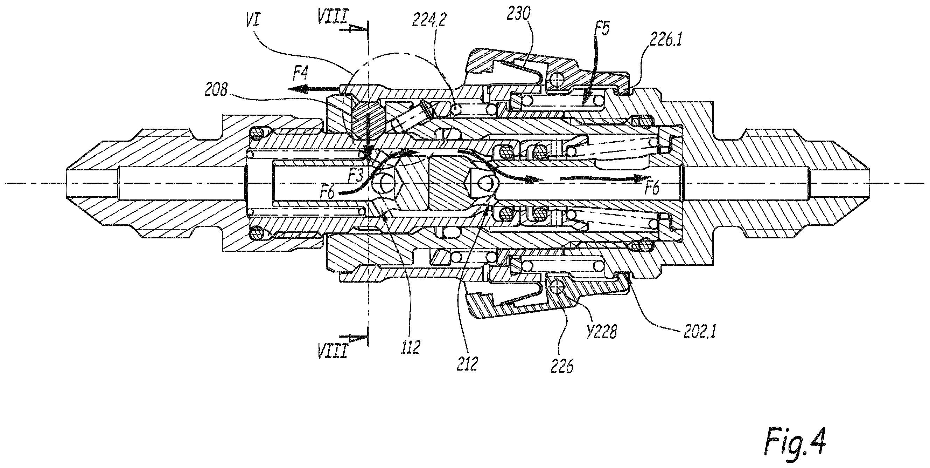

La séquence d'accouplement de l'élément mâle 100 avec l'élément femelle 200 est détaillée ci-dessous en lien avec les figures 3 et 4.

La première étape de l'accouplement consiste à positionner les éléments 100 et 200 l'un en face de l'autre et à les rapprocher l'un de l'autre, comme représenté par les flèches F1 à la figure 3. Le corps mâle 104 est alors reçu à l'intérieur du corps femelle 204. A ce stade, les axes X100 et X200 sont confondus selon un même axe, lequel forme un axe d'accouplement du raccord R. En pénétrant à l'intérieur du corps femelle 204, le corps mâle 104 pousse le tiroir 240 vers l'arrière, à l'encontre de l'effort élastique exercé par le ressort 236. Dans le même temps, le piston fixe 210 de l'élément femelle 200 repousse le clapet mobile 110 de l'élément mâle 100 vers l'arrière, à l'encontre de l'effort élastique exercé par le ressort 114. Avantageusement, le rayon extérieur r104 de l'extrémité avant du corps mâle 104 est inférieur à la distance d206 entre l'un quelconque des éléments mémoire 206, en position distale, et l'axe X200. Ainsi, l'extrémité avant du corps mâle 104 n'entre pas en contact avec les éléments mémoire 206 lorsque le corps 104 est introduit à l'intérieur du corps 204.

En revanche, la collerette 106 a un rayon r106 supérieur à la distance minimale d206 entre l'un quelconque des éléments mémoire 206, en position distale, et l'axe central X200. Ainsi, la poursuite du mouvement entraine que le relief 106 du corps mâle 104 parvient au contact de chaque élément mémoire 206. Plus précisément, la surface 106.3 de la collerette 106 bute contre le talon tronconique 206.2 des éléments mémoire 206. Le fait d'avoir plusieurs éléments mémoire 206 et un moyen de rappel 200 commun à tous les éléments mémoire 206 présente l'avantage que si le corps mâle 104 est inséré de travers à l'intérieur du corps femelle 204 et pousse contre un seul des éléments mémoire uniquement, alors l'anneau 220.1 s'incline par rapport à l'axe X200 et se met en configuration d'arc-boutement autour du corps femelle 204. Dans cette configuration, l'anneau 220.1 est immobilisé en translation autour du corps femelle 204 et s'oppose au déplacement des autres éléments mémoire 206 en position proximale.

Dans le même temps, le corps mâle 104 prend appui contre l'alésage intérieur du corps femelle 204, notamment au niveau du joint d'étanchéité 232. Le raccord R se trouve alors dans la configuration de la figure 3.

En enfonçant davantage le corps mâle 104 à l'intérieur du corps femelle 204, les organes de verrouillage 208 dépassent la collerette 106 et chaque élément mémoire 106 est poussé de sa position distale vers sa position proximale par la surface 106.3 de la collerette 106, comme représentée par la flèche F2 à la figure 3. L'anneau 220.1 recule et le ressort 220.2 est comprimé. Chaque élément mémoire 206 est ensuite maintenu en position proximale par la surface de sommet 106.2 du relief 106. Ce maintien est obtenu grâce au fait que les parois 106.2 et 106.3 sont accolées. Le fait que les pions mémoire 206 passent en position proximale permet de libérer le mouvement des organes de verrouillage 208 dans le sens radial. Chaque organe de verrouillage 208 peut donc être repoussé en position déverrouillée par la surface de sommet 106.2.

Lorsque les organes de verrouillage 208 parviennent précisément autour de la gorge périphérique 108 du corps mâle 104, ils sont poussés radialement vers l'intérieur par la bague de blocage 218. Effectivement, la bague de blocage 218 est chargée élastiquement vers l'avant par les moyens de rappel 224. Elle exerce donc, par effet de coin, un effort dirigé de façon centripète sur les organes de verrouillage 208. Cet effort radial provient de la complémentarité de surface entre le chanfrein périphérique interne 218.1 formé à l'extrémité avant de la bague de blocage 218 et le chanfrein proximal 2086.1 des organes de verrouillage 208.

Sous l'action de la bague 218, les organes de verrouillage 208 tombent radialement à l'intérieur de la gorge périphérique 108, comme représenté par la flèche F3 à la figure 4. Dans le même temps, la bague de blocage 218 se déplace dans la direction F4 sous l'effort élastique de rappel du ressort 224.2. La bague 218 parvient alors dans une position avancée, ou de recouvrement, dans laquelle elle maintient les organes de verrouillage 208 en position de verrouillage à l'intérieur de la gorge 108. Grâce à cette bague 218, les organes de verrouillage 208 ne sont pas susceptibles de sortir de la gorge 108 sous l'effet de la pression interne du fluide, des vibrations ou de toute autre contrainte mécanique. En position avancée, la bague 218 bute de manière optionnelle contre une partie du corps femelle 204.

Les leviers 226 suivent le mouvement axial de la bague 218, c'est-à-dire se déplacent conjointement avec la bague 218 vers l'avant. Le talon 226.1 de chaque levier 226 parvient alors en face de la gorge 202.1 définie dans le corps d'adaptateur femelle 202 et chaque levier 226 bascule dans la direction F5 sous l'action élastique de la lame ressort 230. Les leviers 226 sont alors accrochés au corps d'adaptateur 202, si bien qu'ils empêchent, au jeu axial près, tout mouvement axial de la bague 218.

Le tiroir mobile 240 est suffisamment reculé pour libérer le passage du fluide à travers les ouvertures 212 du piston fixe 210 et le fluide peut circuler à travers le raccord R, comme représenté par les flèches F6 à la figure 4. Le raccord R est accouplé.

De manière particulièrement avantageuse, l'accouplement des éléments mâle et femelle du raccord R est effectué de façon automatique, c'est-à-dire par simple rapprochement des deux éléments de raccord l'un en direction de l'autre.

En configuration accouplée, le corps mâle 104 est verrouillé axialement avec le corps femelle 204 grâce à la coopération des éléments de verrouillage 208 avec la gorge périphérique 108 du corps mâle 104. Plus précisément, ce verrouillage axial est obtenu grâce à la coopération du chanfrein proximal 2088.1 des organes de verrouillage 208 avec la paroi proximale 106.1 de la collerette 106, cette paroi 106.1 formant une butée mécanique au recul du corps femelle 204. Effectivement, le rayon extérieur r106 de la collerette 106 est naturellement plus grand que la distance d208' qui sépare chaque segment de verrouillage 208, alors en position verrouillée, et l'axe central X200. D'autre part, une surface distale du corps d'adaptateur mâle 102 offre une butée de contact à une surface distale du corps femelle 204 pour limiter davantage le rapprochement des deux éléments mâle et femelle par emmanchement. L'accouplement du raccord est verrouillé de sorte que la position relative d'emmanchement des deux éléments de raccord est bloquée, ou largement limitée.

Dans l'exemple, les surfaces 106.1 et 2088 n'ont pas la même inclinaison par rapport à l'axe d'accouplement du raccord R. Par conséquent, le contact entre les organes de verrouillage 208 et le corps mâle 104 est un contact, non pas ponctuel, mais linéique et la ligne de contact entre les organes de verrouillage 208 et le corps mâle 104 s'étend de façon périphérique autour de l'axe d'accouplement. Cela permet d'éviter les déformations plastiques localisées, ou matage, du corps mâle 104 à long terme puisque les efforts axiaux entre les organes 208 et le corps mâle 104 sont répartis sur une ligne, et non pas localisés en un point précis.

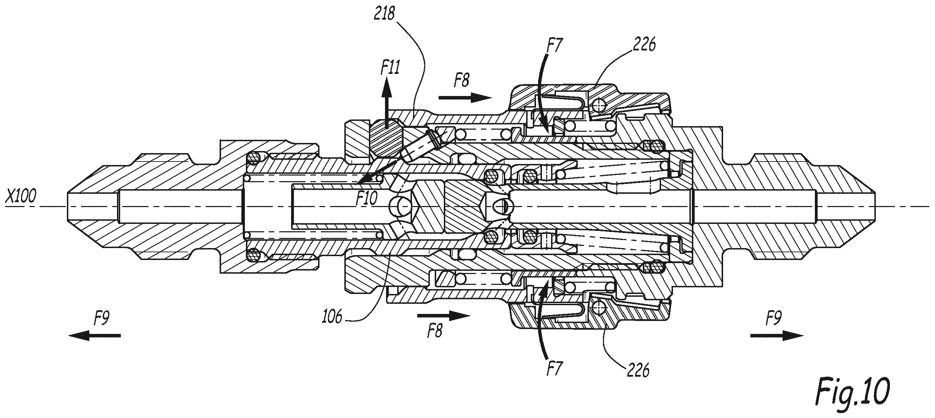

Pour déconnecter le raccord R, il convient, comme représenté à la figure 10, d'effectuer en même temps deux opérations. La première opération consiste à basculer les leviers 226 à l'encontre de l'effort élastique exercé par les lames ressorts 230 de façon à déloger le talon 226.1 de chaque levier 226 à l'extérieur de la gorge périphérique 236 définie sur la périphérie du corps d'adaptateur femelle 202 de l'élément femelle 200. Cette opération permet de libérer le mouvement axial de la bague de bocage 218. La deuxième opération consiste à reculer la bague 218 vers sa position reculée, à l'encontre de l'effort élastique exercé par le ressort 224.2, pour découvrir les organes de verrouillage 208. La bague 218 vient en butée axiale contre une partie non visible du corps d'adaptateur femelle 202. Ces deux opérations peuvent être effectuées en même temps et à une main, en saisissant l'arrière des leviers 226 et, éventuellement la bague 218. Le recul de la bague de blocage 218 permet de libérer le mouvement radial des organes de verrouillage 208. Une fois ces deux opérations effectuées, le désaccouplement du raccord R est obtenu simplement en éloignant les éléments mâle et femelle l'un de l'autre, comme représenté par les flèches F9 à la figure 10.

Plus précisément, lorsque l'on tire sur le corps mâle 104 du côté opposé à l'élément femelle 200, les organes de verrouillage 208 sont poussés radialement vers l'extérieur, par effet de coin du fait de l'inclinaison des surfaces 106.1 et 2088.1, respectivement de la collerette mâle 106 et des organes de verrouillage 208. L'inclinaison spécifique des surfaces 106.1 et 2088.1 permet de faciliter le déplacement des organes de verrouillage 208, c'est-à-dire d'obtenir un déplacement sans accrocs, et d'éviter de coincer l'ensemble, c'est-à-dire d'éviter que le raccord ne puisse plus être désaccouplé

Les organes de verrouillage 208 passent de leur position de verrouillage à leur position déverrouillée. Dans cette position, ils ne s'opposent plus au retrait du corps mâle 104 à l'extérieur du corps femelle 204. Les organes de verrouillage 208 sont maintenus en position déverrouillée par la surface de sommet 106.2 du relief 106, et ce à l'encontre de l'effort de rappel de la bague 218, jusqu'à ce que les éléments mémoire 206 soient rappelés élastiquement de leur position proximale vers la position distale. Effectivement, le rayon extérieur r106 de la collerette 106 est suffisamment grand pour maintenir les organes de verrouillage 208 assez loin de l'axe X200 et permettre ainsi le retour de chaque élément mémoire 206 en position distale, chaque élément mémoire 206 émergeant du côté avant du relief 106. Chaque élément mémoire 206 est donc rappelé en position distale pendant que les organes de verrouillage 208 sont encore maintenus en position déverrouillée par la surface de sommet 106.2. Ce séquencement en termes de déplacement est obtenu avantageusement grâce au fait que les parois 106.2 et 106.3 de la collerette 106 sont accolées.

Plus précisément, l'effort élastique exercé par le ressort 220.2 est transmis à l'anneau 220.1, lequel coopère avec la tête hémisphérique 206.1 de chaque élément mémoire 206 par contact et glissement, pour pousser l'élément mémoire 206 dans le sens de l'axe D206, et vers l'intérieur. La transmission d'efforts entre l'anneau 220.1 et les éléments mémoire est optimisée du fait de la présence de la surface inclinée 220.10 délimitée par l'anneau 220.1. En revenant en position distale, chaque élément mémoire 206 maintient un organe de verrouillage correspondant 208 dans la position déverrouillée, les organes de verrouillage 208 maintenant la bague de blocage 218 dans sa position intermédiaire une fois que celle-ci a été relâchée. La bague 218 demeure chargée élastiquement par le ressort 224.2 en position intermédiaire.

Enfin, le retrait de l'élément mâle entraine le rappel du clapet 110 et du tiroir 140 en position de fermeture, ce qui a pour effet de couper la communication fluidique entre les deux éléments de raccord. Le raccord R est désaccouplé.

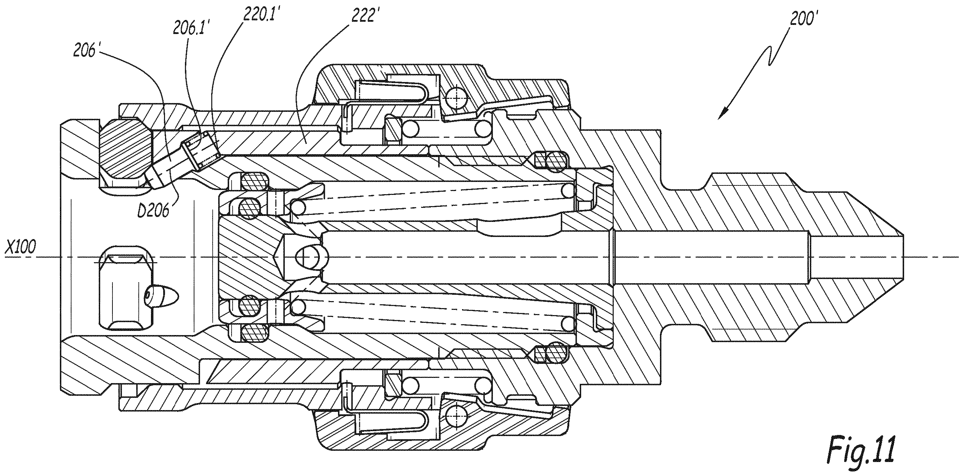

Sur la figure 11 est représenté un élément femelle 200' selon un deuxième mode de réalisation de l'invention. Dans ce qui suit, seules les différences par rapport au premier mode de réalisation sont décrites par souci de concision. Dans ce qui suit, les éléments identiques à ceux du premier mode de réalisation conservent leur référence numérique, alors que les éléments différents ont une référence numérique suivie d'une apostrophe simple (').

L'élément femelle 200' représenté à la figure 11 est spécifique en ce qu'il comprend des éléments mémoire 206' avec une tête plate 206.1' perpendiculaire à l'axe de déplacement D206 et des ressorts de rappel individuels 220.1', c'est-à-dire un ressort 220.1' de rappel pour chaque élément mémoire 206'. Chaque ressort 220.1' est alors interposé entre la tête plate 206.1' d'un élément mémoire et une pièce d'appui 222', comparable à la bague d'appui 222, mais qui n'est pas de forme annulaire. Chaque ressort 220.1' est centré sur un axe confondu avec l'axe D206 de déplacement de l'élément mémoire correspondant.

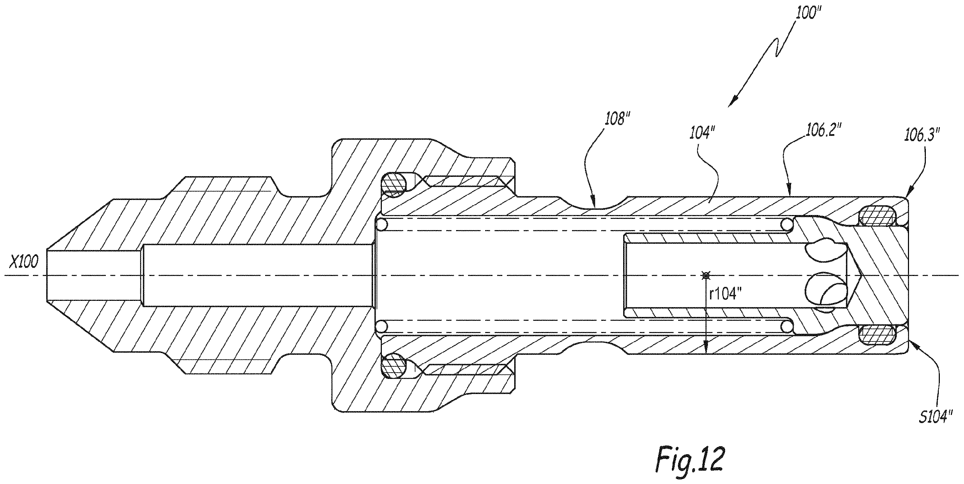

Les figures 12 à 15 concernent un raccord selon un troisième mode de réalisation de l'invention. Dans ce qui suit, seules les différences par rapport aux deux premiers modes de réalisation sont décrites par souci de concision. Dans ce qui suit, les éléments identiques à ceux du premier ou du deuxième mode de réalisation conservent leur référence numérique, alors que les éléments différents ont une référence numérique suivie d'une apostrophe double (").

Le raccord des figures 12 à 15 comprend un élément mâle 100" représenté seul à la figure 12. Par rapport à l'élément mâle 100 selon le premier mode de réalisation, l'élément mâle 100" est spécifique en ce qu'il ne comprend pas de relief comparable à la collerette 106 du premier mode de réalisation. On parle d'un « about lisse ». Dans le troisième mode de réalisation, l'élément mâle 100" comprend un corps mâle 104" ayant une surface axiale d'extrémité S104", une surface radiale externe 106.2" et un arrondi périphérique 106.3" reliant la surface axiale d'extrémité S104" et la surface radiale externe 106.2". L'arrondi 106.3" est optionnel. En variante, il pourrait être remplacé par un chanfrein.

Le corps mâle 104" délimite également une gorge périphérique extérieure 108" qui présente en section, une forme au moins en partie convexe, c'est-à-dire courbée.

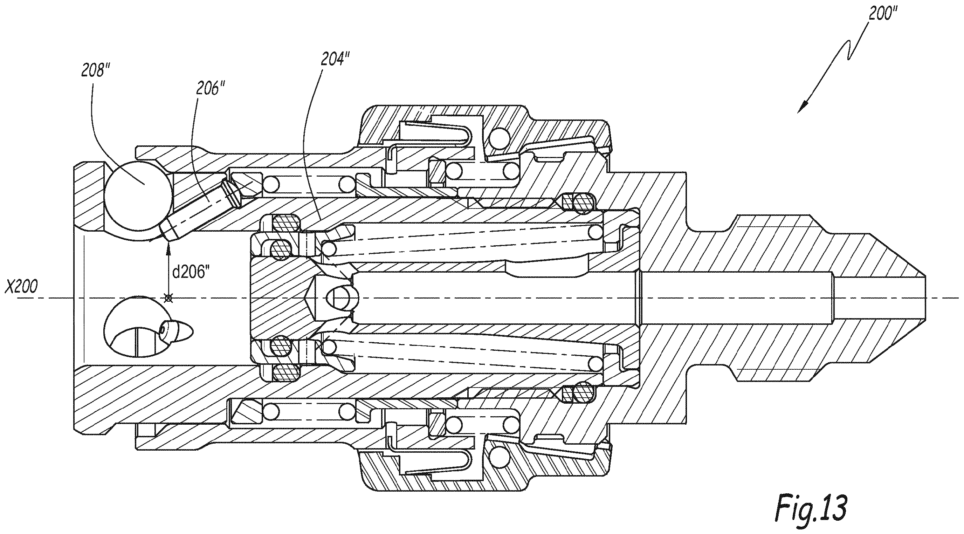

L'élément femelle 200", représenté seul à la figure 13, est spécifique en ce qu'il comprend des organes de verrouillage 208" sous forme de billes. Egalement, les éléments mémoires 206" de l'élément femelle 200" sont configurés de sorte que la distance d206" qui les sépare de l'axe central X200 lorsqu'ils sont en position distale est inférieure au rayon extérieur r104" de la surface radiale externe 106.2" du corps mâle 104". Ainsi, les éléments mémoire 206" sont configurés pour coopérer avec l'extrémité axiale avant du corps mâle 104", et notamment par contact et repoussement des éléments mémoire 206" avec le congé périphérique 106.3" du corps mâle 104", lors de la phase d'accouplement.

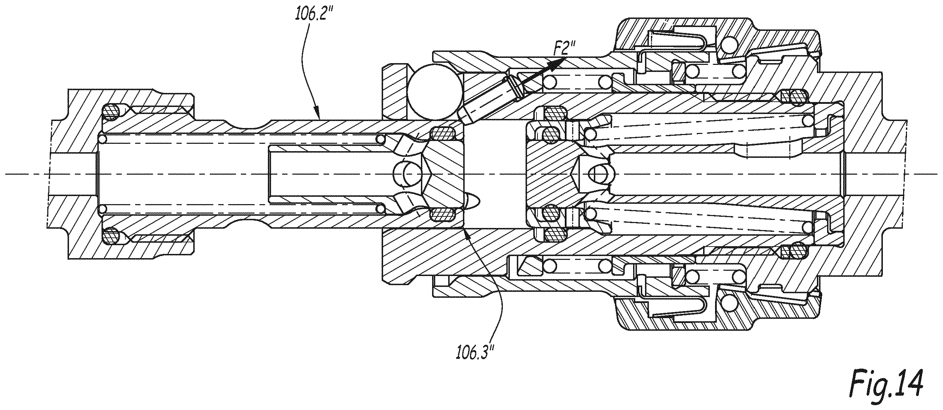

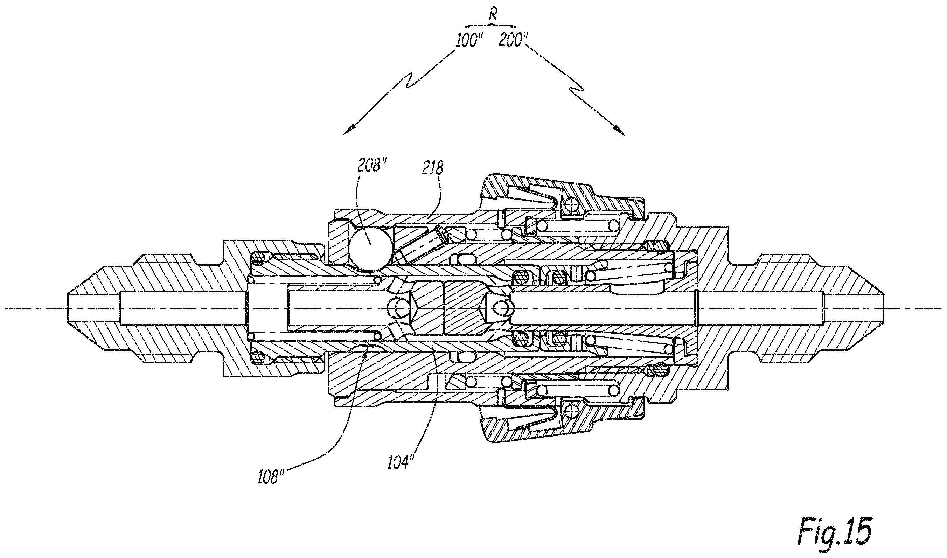

Effectivement, lorsque le corps mâle 104" est reçu à l'intérieur du corps femelle 204", le congé 106.3" pousse chaque élément mémoire 206" de leur position distale vers leur position proximale, comme représenté par la flèche F2" à la figure 14. Les organes de verrouillage 208" sont maintenus quant à eux en position déverrouillée par la surface radiale externe 106.2", de sorte qu'ils apparaissent escamotés dans l'épaisseur du corps 204. Effectivement, ils glissent ou roulent autour de la surface radiale externe 106.2" du corps mâle 104" jusqu'à parvenir au niveau de la gorge périphérique 108". Chaque organe de verrouillage 208 peut donc être repoussé en position déverrouillée par la surface radiale externe 106.2". Dès que les organes de verrouillage 208" parviennent axialement au niveau de la gorge périphérique extérieure 108", ils tombent radialement à l'intérieur de celle-ci sous l'effet de la pression exercée par la bague de blocage 218 puisque celle-ci est chargée élastiquement vers l'avant. Le raccord se trouve alors dans la configuration de la figure 15. Dans cette configuration, la bague de blocage 218 maintient les organes de verrouillage 208" à l'intérieur de la gorge périphérique 108".

Avantageusement, le rayon de courbure de la gorge 108" peut être prévu au moins en partie égal au rayon des billes de verrouillage 208". De cette manière, le contact entre les billes de verrouillage 208" et le corps mâle 104" est un contact non pas ponctuel, mais linéique. Les efforts sont davantage répartis et le corps mâle 104 subit moins de déformations plastiques liées au fonctionnement du raccord.

Lors du désaccouplement, les billes 208" sont délogées de la gorge 108" et passent en position déverrouillée. La bague de blocage 218 revient en position avancée, c'est-à-dire est réarmée, contre les billes de verrouillage 208". Les éléments mémoire 206" sont maintenus en position proximale par la surface radiale externe 106.2" du corps mâle 104" tant que l'about, c'est-à-dire l'élément mâle 100", n'est pas retiré de l'élément femelle 200". Ainsi, la distance entre l'axe central X200 et les billes de verrouillage 208", lorsqu'elles sont en position déverrouillée, est identique à la distance entre l'axe X200 et les éléments mémoire 206" lorsqu'ils sont en position proximale et est également identique au rayon extérieur r104" du corps mâle 104".

En variante non représentée, la géométrie des éléments mémoire 206, 206' ou 206" peut être différente. Par exemple, les éléments mémoire pourraient être des aiguilles, des cales tronconiques, des petites tiges, des verrous, des coulisseaux à section rectangulaire ou encore des billes.

Selon une autre variante non représentée, la face avant 220.10 de l'anneau 220.1 peut être inclinée par rapport à l'axe de déplacement D206 de l'élément mémoire correspondant 206. Notamment, l'anneau 220.1 pourrait avoir une face avant qui soit purement axiale, c'est-à-dire perpendiculaire à l'axe X200. Dans ce cas de figure, les pions 206 ou 206" pourraient être plus longs et comporter une tête non pas hémisphérique mais en forme de biseau, dont la face d'extrémité serait perpendiculaire à l'axe central X200.

Selon une autre variante non représentée, il est possible d'utiliser un moyen de rappel des éléments mémoire différents de ceux représentés. Par exemple, le moyen de rappel des éléments mémoire pourrait être formé par un unique élément élastique, sous forme de boudin, qui serait déformable axialement en compression. Egalement, une simple languette métallique souple pourrait être utilisée.

Selon une autre variante non représentée, le raccord ne comporte pas de leviers de verrouillage 226. Dans ce cas, le verrouillage de la bague de blocage 218 en position avancée pourrait être effectué au moyen d'un système à double manoeuvre consistant en un bouton de rappel disposé à la place du levier et avec lequel la pression d'un doigt à la déconnexion sur le bouton entraine la libération d'un élément de verrouillage de la bague. Egalement, le raccord pourrait très bien être dépourvu de tout système de verrouillage de la bague de blocage 18 en position avancée.

Selon une autre variante non représentée, applicable aux deux premiers modes de réalisation, les chanfreins 2088.1, 2086.1 et 2088.2 pourraient avoir une inclinaison différente de 45°.

Selon une autre variante non représentée, le système de clapet mâle et femelle pourrait être inversé. Dans ce cas, l'élément mâle disposerait d'un piston fixe et d'un tiroir mobile autour du piston fixe et l'élément femelle disposerait d'un clapet central mobile en translation.

Selon une autre variante non représentée, la gorge périphérique extérieure 106 ou 106" pourrait être remplacée par plusieurs logements distincts, répartis autour du corps mâle et destinés chacun à recevoir un organe de verrouillage correspondant.

Selon une autre variante non représentée, le nombre d'éléments mémoire est strictement inférieur au nombre d'organes de verrouillage. En d'autres termes, il n'est pas indispensable que chaque organe de verrouillage 208 ou 208" soit maintenu en position déverrouillée par un élément mémoire complémentaire. L'essentiel est effectivement d'avoir au moins un organe de verrouillage qui soit maintenu en position déverrouillée et émergée du corps femelle de façon à retenir la bague de blocage en position intermédiaire, et donc de disposer d'au moins un élément mémoire.

Les caractéristiques des trois modes de réalisation et représentées sur les figures et des variantes non représentées détaillées ci-dessus peuvent être combinées entre elles pour générer de nouveaux modes de réalisation de l'invention.

## Revendications

1. Elément femelle de raccord rapide (200 ; 200' ; 200"), destiné à la jonction de canalisations sous pression, ledit élément femelle étant apte à être accouplé avec un élément mâle complémentaire (100 ; 100") et comprenant :
- un corps femelle creux (204 ; 204") définissant un axe central (X200),
- des organes de verrouillage (208 ; 208"), chaque organe de verrouillage étant mobile radialement à l'intérieur d'une ouverture radiale correspondante (204.1) du corps femelle entre :
- une position de verrouillage, dans laquelle il dépasse radialement à l'intérieur du corps femelle, et
- une position déverrouillée, dans laquelle il est plus éloigné de l'axe central qu'en position de verrouillage,
- au moins un élément mémoire (206 ; 206' ; 206"), mobile selon un axe de déplacement (D206) entre :
- une position distale, dans laquelle il s'oppose au déplacement d'un organe de verrouillage de la position déverrouillée vers la position de verrouillage, et
- une position proximale, dans laquelle il ne s'oppose pas au déplacement de l'organe de verrouillage de la position déverrouillée vers la position de verrouillage, et
- une bague de blocage (218), qui est mobile axialement entre :
- une position avancée, dans laquelle elle maintient les organes de verrouillage en position de verrouillage, et
- une position reculée, dans laquelle elle ne maintient pas les organes de verrouillage en position de verrouillage,
**caractérisé en ce que** :
- chaque élément mémoire (206 ; 206' ; 206") est reçu dans un logement (204.2) défini dans l'épaisseur du corps,
- chaque élément mémoire (206 ; 206' ; 206") est, en position distale, plus proche de l'axe central (X200) que ne le sont les organes de verrouillage (208) en position déverrouillée, et
- l'axe de déplacement (D206) de chaque élément mémoire entre la position distale et la position proximale est incliné par rapport à l'axe central (X200) du corps femelle.

2. Elément femelle selon la revendication précédente, **caractérisé en ce que** lorsque la bague de blocage (218) est dans une position intermédiaire, disposée axialement entre sa position avancée et sa position reculée, au moins un organe de verrouillage (208 ; 208") en position déverrouillée s'oppose à un retour élastique de la bague de blocage (218) vers sa position avancée.

3. Elément femelle selon la revendication 1 ou 2, **caractérisé en ce que** l'axe de déplacement (D206) de chaque élément mémoire entre sa position distale et sa position proximale est incliné par rapport à l'axe central (X200) d'un angle (A1) compris entre 20° et 40°, de préférence égal à 30°.

4. Elément femelle selon l'une des revendications 1 à 3, **caractérisé en ce que** l'élément femelle comprend un moyen (220 ; 220.1') de rappel de chaque élément mémoire en position distale, ce moyen de rappel comprenant de préférence un ressort (220.1), qui est interposé radialement entre le corps femelle (204) et la bague de blocage (218).

5. Elément femelle (200 ; 200") selon la revendication précédente, **caractérisé en ce que** le moyen de rappel (220) comprend un anneau (220.1), qui est mobile axialement entre le corps femelle et la bague de blocage et qui est chargé élastiquement contre l'élément mémoire (206 ; 206").

6. Elément femelle selon la revendication précédente, **caractérisé en ce que** chaque élément mémoire (206 ; 206") a une tête hémisphérique (206.1), configurée pour coopérer avec l'anneau.

7. Elément femelle (200 ; 200') selon l'une des revendications précédentes, **caractérisé en ce que** les organes de verrouillage (208) ont chacun une section non-circulaire dans un plan passant par l'axe central (X200).

8. Elément femelle selon l'une des revendications précédentes, **caractérisé en ce que** l'élément femelle comprend plusieurs éléments mémoire (206 ; 206' ; 206") répartis de façon régulière autour de l'axe central (X200).

9. Elément femelle selon l'une des revendications précédentes, **caractérisé en ce que** chaque élément mémoire (206 ; 206' ; 206") est un pion avec une portion cylindrique dont les génératrices sont parallèles à son axe de déplacement (D206).

10. Elément femelle selon l'une des revendications précédentes, **caractérisé en ce que** chaque élément mémoire (206 ; 206' ; 206") comprend un talon (206.2), de forme tronconique et configuré pour prendre appui contre un chanfrein (2088.1) de l'organe de verrouillage.

11. Raccord (R) pour la jonction amovible de deux canalisations de passage d'un fluide, ce raccord comprenant un élément femelle (200 ; 200' ; 200") selon l'une des revendications précédentes et un élément mâle complémentaire (100 ; 100").

12. Raccord selon la revendication précédente, **caractérisé en ce que** l'élément mâle comporte un corps mâle (104 ; 104"), qui est apte à pousser chaque élément mémoire de sa position distale vers sa position proximale lorsqu'il est reçu à l'intérieur du corps femelle et à coopérer avec les organes de verrouillage (208) lorsqu'ils sont en position de verrouillage pour empêcher le retrait axial du corps mâle à l'extérieur du corps femelle.

13. Raccord selon la revendication précédente, **caractérisé en ce que** le corps mâle (104 ; 104") comporte une première surface (106.3 ; 106.3") apte à repousser chaque élément mémoire en position proximale et une deuxième surface (106.2 ; 106.2") apte à repousser chaque organe de verrouillage en position déverrouillée et **en ce que** la première surface et la deuxième surface sont accolées l'une à l'autre.

14. Raccord selon la revendication précédente, **caractérisé en ce que** la première surface et la deuxième surface appartiennent à un relief (106) du corps mâle, le relief étant de préférence une collerette comprenant une paroi proximale (106.1), une paroi distale (106.3) formant la première surface et un sommet formant la deuxième surface et s'étendant entre la paroi proximale et la paroi distale.

15. Raccord selon l'une des revendications 13 et 14 **caractérisé en ce que**, lors du désaccouplement, chaque élément mémoire (206 ; 206' ; 206") est rappelé en position distale pendant que les organes de verrouillage (208) sont maintenus en position déverrouillée par la deuxième surface.

## Patentansprüche

1. Aufnahmeelement (200; 200'; 200") einer Schnellkupplung, das für die Verbindung von unter Druck stehenden Leitungen vorgesehen ist, wobei das Aufnahmeelement geeignet ist, mit einem komplementären Einsteckelement (100; 100) gekoppelt zu werden, und umfasst:
- einen Aufnahmekörper (204; 204"), der eine Mittelachse (X200) definiert,
- Verriegelungselemente (208; 208"), wobei jedes Verriegelungsrelief radial im Inneren einer entsprechenden radialen Öffnung (204.1) des Aufnahmekörpers beweglich ist zwischen:
- einer Verriegelungsposition, in der es radial in das Innere des Aufnahmekörpers hineinreicht, und
- einer entriegelten Position, in der es von der Mittelachse weiter entfernt ist als in der Verriegelungsposition,
- mindestens ein Erinnerungselement (206; 206'; 206"), das gemäß einer Verschiebungsachse (D206) zwischen:
- einer distalen Position, in der es sich einer Verschiebung eines Verriegelungselementes von der entriegelten Position in die Verriegelungsposition entgegenstellt und
- einer proximalen Position, in der es sich nicht der Verschiebung des Verriegelungselementes von der entriegelten Position in die Verriegelungsposition entgegenstellt, und
- eine Blockierhülse (218), die axial beweglich ist zwischen:
- einer vorgerückten Position, in der sie die Verriegelungselemente in der Verriegelungsposition hält, und
- einer zurückgezogenen Position, in der sie die Verriegelungselemente nicht in der Verriegelungsposition hält,
**dadurch gekennzeichnet, dass**:
- jedes Erinnerungselement (206; 206'; 206") in einem Aufnahmeraum (204.2) aufgenommen ist, der in der Materialstärke des Körpers begrenzt ist,
- jedes Erinnerungselement (206; 206'; 206") in der distalen Position näher an der Mittelachse (X200) ist als es die Verriegelungselemente (208) in der entriegelten Position sind, und
- die Verschiebungsachse (D206) jedes Erinnerungselementes zwischen der distalen Position und der proximalen Position in Bezug auf die Mittelachse (X200) des Aufnahmekörpers geneigt ist.

2. Aufnahmeelement nach dem vorhergehenden Anspruch, **dadurch gekennzeichnet, dass**, wenn die Blockierhülse (218) in einer Zwischenposition ist, die axial zwischen ihrer vorgerückten Position und ihrer zurückgezogenen Position liegt, mindestens ein Verriegelungselement (208; 208") in der entriegelten Position sich einer Rückfederung der Blockierhülse (218) in ihre vorgerückte Position entgegenstellt.

3. Aufnahmeelement nach Anspruch 1 oder 2, **dadurch gekennzeichnet, dass** die Verschiebungsachse (D206) jedes Erinnerungselementes zwischen seiner distalen Position und seiner proximalen Position in Bezug auf die Mittelachse (X200) um einen Winkel (A1) zwischen 20° und 40° liegt, vorzugsweise gleich 30° ist.

4. Aufnahmeelement nach einem der Ansprüche 1-3, **dadurch gekennzeichnet, dass** das Aufnahmeelement ein Mittel (220; 220.1') zum Rückstellen jedes Erinnerungselements in die distalen Position umfasst, wobei dieses Rückstellmittel vorzugsweise eine Feder (220.1) umfasst, die radial zwischen dem Aufnahmekörper (204) und der Blockierhülse (218) angeordnet ist.

5. Aufnahmeelement (200; 200") nach dem vorhergehenden Anspruch, **dadurch gekennzeichnet, dass** das Rückstellmittel (220) einen Ring (220.1) umfasst, der axial zwischen dem Aufnahmekörper und der Blockierhülse beweglich ist und der elastisch gegen das Erinnerungselement (206; 206") vorgespannt ist.

6. Aufnahmeelement nach dem vorhergehenden Anspruch, **dadurch gekennzeichnet, dass** jedes Erinnerungselement (206; 206") einen halbkugelförmigen Kopf (206.1) aufweist, der für die Zusammenarbeit mit dem Ring ausgebildet ist.

7. Aufnahmeelement (200; 200') nach einem der vorhergehenden Ansprüche, **dadurch gekennzeichnet, dass** die Verriegelungselemente (208) jeweils einen nicht kreisförmigen Querschnitt in einer Ebene aufweisen, die durch die Mittelachse (X200) hindurchgeht.

8. Aufnahmeelement nach einem der vorhergehenden Ansprüche, **dadurch gekennzeichnet, dass** das Aufnahmeelement mehrere Erinnerungselemente (206; 206'; 206") aufweist, die gleichmäßig um die Mittelachse (X200) verteilt sind.

9. Aufnahmeelement nach einem der vorhergehenden Ansprüche, **dadurch gekennzeichnet, dass** jedes Erinnerungselement (206; 206'; 206") ein Stift mit einem zylindrischen Teil ist, dessen Mantellinien parallel zu seiner Verschiebungsachse (D206) sind.

10. Aufnahmeelement nach einem der vorhergehenden Ansprüche, **dadurch gekennzeichnet, dass** jedes Erinnerungselement (206; 206'; 206") einen kegelstumpfförmigen Absatz (206.2) umfasst, der ausgebildet ist, sich gegen eine Schräge (2088.1) des Verriegelungselementes abzustützen.

11. Kupplung (R) für die lösbare Verbindung von zwei Leitungen für den Durchgang eines Fluids, wobei diese Kupplung ein Aufnahmeelement (200; 200'; 200") nach einem der vorhergehenden Ansprüche und ein komplementäres Einsteckelement (100; 100") umfasst.

12. Kupplung nach dem vorhergehenden Anspruch, **dadurch gekennzeichnet, dass** das Einsteckelement einen Einsteckkörper (104; 104") aufweist, der geeignet ist, jedes Erinnerungselement aus seiner distalen Position in seine proximale Position zu drücken, wenn er im Inneren des Aufnahmekörpers aufgenommen wird, und mit den Verriegelungselement (208) zusammenzuarbeiten, wenn sie in der Verriegelungsposition sind, zum Verhindern des axialen Zurückziehens des Einstecckörpers aus den Aufnahmekörper.

13. Kupplung nach dem vorhergehenden Anspruch, **dadurch gekennzeichnet, dass** der Einsteckkörper (104; 104") eine erste Fläche (106.3; 106.3"), die geeignet ist, jedes Erinnerungselement in die proximale Position zurückzuschieben, und eine zweite Fläche (106.2; 106.2") aufweist, die geeignet ist, jedes Verriegelungselement in die entriegelten Position zurückzuschieben, und dass die erste Fläche und die zweite Fläche aneinander anliegen.

14. Kupplung nach dem vorhergehenden Anspruch, **dadurch gekennzeichnet, dass** die erste Fläche und die zweite Fläche zu einem Relief (106) des Einsteckkörpers gehören, wobei das Relief vorzugsweise ein Kragen ist, der eine proximale Wand (106.1), eine distalen Wand (106.3), die die erste Fläche bildet, und einen Kuppe umfasst, die die zweite Fläche bildet und sich zwischen der proximalen Wand und der distalen Wand erstreckt.

15. Kupplung nach einem der Ansprüche 13 und 14, **dadurch gekennzeichnet, dass** bei dem Entkuppeln jedes Erinnerungselement (206; 206'; 206") in die distalen Position vorgespannt wird, während die Verriegelungselemente (208) in der entriegelten Position durch die zweite Fläche gehalten werden.

## Claims

1. A female quick coupling element (200; 200'; 200"), for joining pressurized pipes, said female element being able to be coupled with a complementary male element (100; 100") and comprising:
- a hollow female body (204; 204") defining a central axis (X200),
- locking members (208; 208"), each locking member being radially movable inside a corresponding radial opening (204.1) of the female body between:
- a locked position, in which it protrudes radially inside the female body, and
- an unlocked position, in which it is further from the central axis than in the locked position,
- at least one memory element (206; 206'; 206"), movable along a movement axis (D206) between:
- a distal position, in which it opposes the movement of a locking member from the unlocked position to the locked position, and
- a proximal position, in which it does not oppose the movement of the locking member from the unlocked position toward the locked position, and
- a locking ring (218), which is axially movable between:
- a forward position, in which it keeps the locking members in the locked position, and
- a withdrawn position, in which it does not keep the locking members in the locked position,
**characterized in that**:
- each memory element (206; 206'; 206") is received in a housing (204.2) defined in the thickness of the body,
- each memory element (206; 206'; 206") is, in the distal position, closer to the central axis (X200) than the locking members (208) are in the unlocked position, and
- the movement axis (D206) of each memory element between the distal position and the proximal position is inclined relative to the central axis (X200) of the female body.

2. The female element according to the preceding claim, **characterized in that** when the locking ring (218) is in an intermediate position, positioned axially between its forward position and its withdrawn position, at least one locking member (208; 208") in the unlocked position opposes a resilient return of the locking ring (218) toward its forward position.

3. The female element according to claim 1 or 2, **characterized in that** the movement axis (D206) of each memory element between its distal position and its proximal position is inclined relative to the central axis (X200) by an angle (A1) comprised between 20° and 40°, preferably equal to 30°.

4. The female element according to one of claims 1 to 3, **characterized in that** the female element comprises a return means (220; 220.1') (for returning each memory element to the distal position, this return means preferably comprising a spring (220.1), which is inserted radially between the female body (204) and the locking ring (218).

5. The female element (200; 200") according to the preceding claim, **characterized in that** the return means (220) comprises an annulus (220.1), which is axially movable between the female body and the locking ring and which is resiliently loaded against the memory element (206; 206").

6. The female element according to the preceding claim, **characterized in that** each memory element (206; 206") has a hemispherical head (206.1), configured to cooperate with the annulus.

7. The female element (200; 200') according to one of the preceding claims, **characterized in that** the locking members (208) each have a noncircular section in a plane passing through the central axis (X200).

8. The female element according to one of the preceding claims, **characterized in that** the female element comprises several memory elements (206; 206'; 206") distributed regularly around the central axis (X200).

9. The female element according to one of the preceding claims, **characterized in that** each memory element (206; 206'; 206") is a pin with a cylindrical portion whose generatrices are parallel to its movement axis (D206).

10. The female element according to one of the preceding claims, **characterized in that** each memory element (206; 206'; 206") comprises a heel (206.2), with a frustoconical shape and configured to bear against a bevel (2088.1) of the locking member.

11. A coupling (R) for removably joining two fluid passage pipes, this coupling comprising a female element (200; 200'; 200") according to one of the preceding claims and a complementary male element (100; 100").

12. The coupling according to the preceding claim, **characterized in that** the male element includes a male body (104; 104"), which is able to push each memory element from its distal position toward its proximal position when it is received inside the female body and to cooperate with the locking members (208) when they are in the locked position to prevent the axial removal of the male body outside the female body.

13. The coupling according to the preceding claim, **characterized in that** the male body (104; 104") includes a first surface (106.3; 106.3") able to push back each memory element to the proximal position and a second surface (106.2; 106.2") able to push back each locking member to the unlocked position, and **in that** the first surface and the second surface are alongside one another.

14. The coupling according to the preceding claim, **characterized in that** the first surface and the second surface belong to a relief (106) of the male body, the relief preferably being a flange comprising a proximal wall (106.1), a distal wall (106.3) forming the first surface and an apex forming the second surface and extending between the proximal wall and the distal wall.

15. The coupling according to one of claims 13 and 14, **characterized in that**, during uncoupling, each memory element (206; 206'; 206") is returned to the distal position while the locking members (208) are kept in the unlocked position by the second surface.
